# EUROPEAN PATENT APPLICATION

(11) **EP 4 836 321 A1**
(43) Date of publication of application: **04.11.2026**
(21) Application number: 26171836.5
(22) Date of filing: 13.04.2026
(51) Int. Cl.: H04B 10/112

(54) **SYSTEMS AND METHODS FOR GENERATING A LONGITUDINALLY STRUCTURED BEAM FOR IMPROVED TRANSMISSION IN TURBULENCE**

(30) Priority: 29.04.2025 US 202519193047
(71) Applicant: University Of Southern California, Los Angeles California 90089 (US)
(72) Inventor: Willner, Alan, Los Angeles, 90089 (US); Zhou, Huibin, Los Angeles, 90089 (US); Tepper, Jan, 31700 Blagnac (FR); Ziegler, Volker, 31700 Blagnac (FR)
(74) Representative: Isarpatent

(57) **Abstract**

Methods and systems for generating a longitudinally structured beam for improved transmission in turbulence are disclosed. A method (500) includes receiving (502) turbulence information indicating a location of a turbulence region, determining (502) spatial modes of a beam based on the location of the turbulence region, and generating (503) instructions for generating a longitudinally structured beam includes the spatial modes, where the longitudinally structured beam includes a smaller beam width at the location of the turbulence region compared to a beam width outside of the location of the turbulence region.

## Description

### TECHNICAL FIELD

The disclosure herein relates generally to free-space optics, and more particularly to generating a longitudinally structured beam for improved transmission in turbulence.

### BACKGROUND

Space-free optics transmission provide transmission of data or light through space, such as air or a vacuum, without requiring optical fibers or other guiding mediums for the transmission. In many applications of free-space optics, fundamental Gaussian optical beams are usually utilized. However, turbulence in the transmission path of space-free optics, such as lasers, distorts the optical beam. The turbulence effects can significantly distort the transmitted Gaussian beam and cause system performance degradations. Previous techniques, such as adaptive optics (AO), have been proposed to mitigate turbulence-induced wavefront distortions for Gaussian beams. However, these approaches require additional optical and electrical components, as well as complex signal processing and feedback loops. Moreover, while these mitigation approaches may address the accumulated effects of the whole beam propagation path, they are not specifically designed and optimized for scenarios where turbulence strength varies along the path. The fundamental Gaussian beam, with a single Gaussian spatial mode, diverges and its beam width grows as the beam propagates. Therefore, its beam width cannot be easily tailored at any distance.

These and other deficiencies exist. Accordingly, there is a need for a Gaussian beam that is tunable along its path based on a location of turbulence to improve space-free optics transmission in turbulence.

### SUMMARY

The described subject matter relates to systems, methods, devices, and computer-readable storage mediums for generating a longitudinally structured beam for improved transmission in turbulence. An example method for generating a longitudinally structured beam for improved transmission in turbulence includes receiving, by a computing device, turbulence information indicating a location of a turbulence region. The method includes determining, by the computing device, a plurality of spatial modes of a beam based on the location of the turbulence region. The method includes generating, by the computing device, instructions for generating a longitudinally structured beam including the plurality of spatial modes, where the longitudinally structured beam includes a smaller beam width at the location of the turbulence region compared to a beam width outside of the location of the turbulence region.

In an aspect of the described method, the method includes sending, by the computing device, the generated instructions to a spatial light modulator to generate the longitudinally structured beam, where the beam is incident to the spatial light modulator from a laser.

In an aspect of the described method, the instructions generated are for the beam width of the longitudinally structured beam to narrow as the longitudinally structured beam reaches the location of the turbulence region and to widen past the location of the turbulence region.

In an aspect of the described method, the method includes generating the longitudinally structured beam from an aircraft, where the longitudinally structured beam is configured for optical communication.

In an aspect of the described method, the turbulence information indicates a turbulence strength at the turbulence region, where the width of the longitudinally structured beam at the turbulence region is based on the turbulence strength.

In an aspect of the described method, the plurality of spatial modes includes a plurality of Bessel-Gaussian spatial modes each including a distinct longitudinal wavenumber.

In an aspect of the described method, the distinct longitudinal wavenumbers include equal spatial frequency spacing.

An example system for generating a longitudinally structured beam for improved transmission in turbulence includes a computing device communicatively connected to a spatial light modulator. The computing device includes a processor and memory storing instructions that, when executed by the processor, cause the processor to receive turbulence information indicating a location of a turbulence region, determine a plurality of spatial modes of a beam based on the location of the turbulence region, and generate instructions for generating a longitudinally structured beam comprising the plurality of spatial modes, where the longitudinally structured beam includes a smaller beam width at the location of the turbulence region compared to a beam width outside of the location of the turbulence region.

In an aspect of the described system, the instructions cause the processor to send the generated instructions to the spatial light modulator to generate the longitudinally structured beam, where the beam is incident to the spatial light modulator from a laser.

In an aspect of the described system, the instructions generated are for the beam width of the longitudinally structured beam to narrow as the longitudinally structured beam reaches the location of the turbulence region and to widen past the location of the turbulence region.

In an aspect of the described system, the system includes an aircraft from which the longitudinally structured beam is generated, where the longitudinally structured beam is configured for optical communication.

In an aspect of the described system, the turbulence information indicates a turbulence strength at the turbulence region, where the width of the longitudinally structured beam at the turbulence region is based on the turbulence strength.

In an aspect of the described system, the plurality of spatial modes includes a plurality of Bessel-Gaussian spatial modes each including a distinct longitudinal wavenumber.

In an aspect of the described system, the distinct longitudinal wavenumbers includes equal spatial frequency spacing.

An example non-transitory computer-readable storage medium includes instructions that when executed by a processor of a device, cause the processor to receive turbulence information indicating a location of a turbulence region, determine a plurality of spatial modes of a beam based on the location of the turbulence region, and generate instructions for generating a longitudinally structured beam comprising the plurality of spatial modes, where the longitudinally structured beam includes a smaller beam width at the location of the turbulence region compared to a beam width outside of the location of the turbulence region.

In an aspect of the described non-transitory computer-readable storage medium, the instructions cause the processor to send the generated instructions to the spatial light modulator to generate the longitudinally structured beam, where the beam is incident to the spatial light modulator from a laser.

In an aspect of the described non-transitory computer-readable storage medium, the instructions generated are for the beam width of the longitudinally structured beam to narrow as the longitudinally structured beam reaches the location of the turbulence region and to widen past the location of the turbulence region.

In an aspect of the described non-transitory computer-readable storage medium, the non-transitory computer-readable storage medium includes an aircraft from which the longitudinally structured beam is generated, where the longitudinally structured beam is configured for optical communication.

In an aspect of the described non-transitory computer-readable storage medium, the turbulence information indicates a turbulence strength at the turbulence region, where the width of the longitudinally structured beam at the turbulence region is based on the turbulence strength.

In an aspect of the described non-transitory computer-readable storage medium, the plurality of spatial modes includes a plurality of Bessel-Gaussian spatial modes each including a distinct longitudinal wavenumber.

### BRIEF DESCRIPTION OF THE DRAWINGS

To easily identify the discussion of any particular element or act, the most significant digit or digits in a reference number refer to the figure number in which that element is first introduced.
FIG. 1 illustrates a system for generating a longitudinally structured beam for improved communications in turbulence.
FIG. 2 is a schematic illustration of longitudinally structured beams passing through turbulence regions.
FIG. 3 is a schematic illustration of a longitudinally structured beam passing through multiple turbulence regions.
FIG. 4 shows charts of different longitudinal wavenumbers in Bessel-Gaussian spatial modes and on-axis intensity and width of a resulting beam from coherent super-positioning of the modes.
FIG. 5 illustrates an example method for generating a longitudinally structured beam for improved transmission in turbulence in accordance with one embodiment.

### DETAILED DESCRIPTION

The following description of embodiments provides non-limiting representative examples referencing numerals to particularly describe features and teachings of different aspects of the disclosure herein. The embodiments described will be recognized as capable of implementation separately, or in combination, with other embodiments from the description of the embodiments and the features and teachings of any embodiment can be interchangeably combined with the features and teachings of any other embodiment. A person of ordinary skill in the art reviewing the description of embodiments will be able to learn and understand the different described aspects of the disclosure herein. The description of embodiments will facilitate understanding of the disclosure herein to such an extent that other implementations, not specifically covered but within the knowledge of a person of skill in the art having read the description of embodiments, will be understood to be consistent with an application of the disclosure herein.

Furthermore, the described features, advantages, and characteristics of the embodiments may be combined in any suitable manner. A person of ordinary skill in the art will recognize that the embodiments may be practiced without one or more of the specific features or advantages of an embodiment. In other instances, additional features and advantages may be recognized in certain embodiments that may not be present in all embodiments. A person of ordinary skill in the art will understand that the described features, advantages, and characteristics of any embodiment can be interchangeably combined with the features, advantages, and characteristics of any other embodiment.

The systems and methods disclosed herein are directed to generating a longitudinally structured beam for improved transmission in turbulence. Turbulence is the irregular flow of air and generally occurs in the atmosphere from temperature variation of the atmosphere. Turbulence also occurs in the vicinity of flying aircraft, caused by the movement of the aircraft itself and the engines. Turbulence causes changes in the refractive index, which distorts light waves and impedes free-space optics. The degree of distortion to a laser beam traveling through turbulence is related to the size of the beam's cross-sectional area, which is also referred to herein as the beam's width. A beam with a smaller width passing through a turbulence region will incur less distortion than a counterpart beam with a larger width. Specifically, narrowing a beam's cross-section minimizes higher-order optical wavefront distortions in turbulent environments.

The described subject matter provides novel systems and methods of minimizing higher-order optical wavefront distortions caused by turbulent environments, in particular where the turbulence strength varies across the transmission path of the optical beam, by tailoring the beam width along the path to have a smaller width in turbulence regions compared to the beam's width outside of the turbulence regions. The described beam is a longitudinally structured beam with tailorable and tunable distance-varying beam width. The beam is composed of multiple Bessel-Gaussian spatial modes that are coherently super-positioned. Spatial modes of a beam describe the intensity and phase distribution across a cross-section of the beam.

The beam width of the longitudinally structured beam can be tailored at given distances by designing the complex coefficients of the Bessel-Gaussian spatial modes due to the constructive and destructive interference between the multiple Bessel-Gaussian modes. Additionally, each Bessel-Gaussian spatial mode can have a distinct longitudinal wavenumber *k_{z}*, which measures the spatial frequency of a wave and is the number of wavelengths per unit length. The longitudinal wavenumbers *k_{z}* can have equal spatial frequency spacing. Adjusting the longitudinal wavenumber *k_{z}* of a Bessel-Gaussian spatial mode determines the resulting constructive or destructive interference with the other modes of the beam, and adjusting the complex coefficients determines the magnitude of the interference caused and where the interference is caused on the beam on the propagation path. By having a smaller beam width where the turbulence is strong, a smaller wavefront error is accumulated in this region. This effect is similar to imaging under turbulent conditions, where the image quality degrades with larger apertures for a given turbulent strength, especially when the aperture becomes larger than the coherence length of atmospheric turbulence, i.e., Fried parameter. For a given Fried Parameter, fewer higher-order wavefront errors are accumulated for smaller beam widths.

Unlike a fundamental Gaussian beam (with only a single Gaussian spatial mode) that diverges and widens as the beam propagates and cannot be easily tailored at any distance, the longitudinally structured beam can be tailored at any distance. Moreover, compared to previous approaches to mitigate distortion from turbulence such as adaptive optics, the longitudinally structured beam mitigates turbulence by being tailored to adapt to the distance-varying turbulence without requiring additional wavefront corrections and, therefore, the longitudinally structured beam does not require additional optical and electrical components or additional complex signal processing and feedback loops to tailor the beam.

A computing device receives turbulence information, which includes locations of one or more turbulence regions and can further includes respective turbulence strengths of the regions. The computing device determines Bessel-Gaussian spatial modes of a beam based on the turbulence information. The spatial modes are determined to tune the Bessel-Gaussian beam such that, when super-positioned, result in a longitudinally structured beam with different beam widths along various longitudinal distances based on the constructive and destruction interference among the combined modes. The computing device then generates instructions for generating a longitudinally structured beam comprising the plurality of spatial modes, wherein the longitudinally structured beam comprises a smaller beam width at the location of the turbulence region compared to a beam width outside of the location of the turbulence region. Without limitation, example applications include an optical transmitter mounted on an aircraft where in its vicinity a much stronger turbulence is expected as caused by the aircraft's motion and engines. The aircraft can implement the described longitudinally structured beam to tailor the beams it transmits, such as beams for communication or sensing, and reduce distortions caused by the turbulence. The aircraft can also utilize the longitudinally structured beam to reduce beam distortions caused by unevenly distributed atmospheric turbulence at different altitudes, which are generally stronger at a lower altitude. The longitudinally structured beam can be implemented for any source transmitting free-space optics through turbulence including unmanned aerial vehicles (UAVs) and satellites. This poses a problem in different applications, such as free-space optical communication or sensing, for various flying platforms (e.g., aircraft, UAVs, and satellites).

References to a width of a beam refer to a width of a cross-section of the beam where the cross-section is normal to the propagation path z of the beam. It is also understood that affecting the width of the beam also affects the cross-sectional area of the beam and, thus, a narrower or wider beam also refers to a smaller or larger cross-sectional area of the beam, respectively.

In the following description, for the purpose of explanation, numerous specific details are set forth in order to provide a thorough understanding thereof. It may be evident, however, that the novel embodiments can be practiced without these specific details. In other instances, well-known structures and devices are shown in block diagram form in order to facilitate a description thereof.

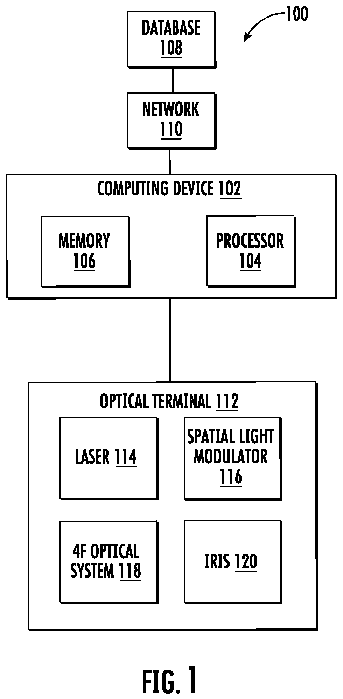

FIG. 1 illustrates a system 100 for generating a longitudinally structured beam for improved communications in turbulence. System 100 can include a computing device 102 including at least one processor 104 and memory 106. Computing device 102 can be a network-enabled computer and can be communicatively connected to a database 108. As referred to herein, a network-enabled computer may include, but is not limited to a computer device, or communications device including, e.g., a server, a network appliance, a personal computer, a workstation, a phone, a handheld PC, a personal digital assistant, a thin client, a fat client, an Internet browser, or other device. Although only one database is shown in FIG. 1, it is understood that database 108 can include a plurality of databases. Database 108 can include at least one database accessed by computing device 102 via network 110.

Computing device 102 can execute one or more applications, such as software applications, that enable, for example, network communications with one or more components of system 100, transmit and/or receive data, and perform the functions and processes described herein. System 100 may include one or more network(s) 110. In some examples, network 110 may be one or more of a wireless network, a wired network or any combination of wireless network and wired network. For example, network 110 may include one or more of a fiber optics network, a passive optical network, a cable network, an Internet network, a network utilizing free-space optics, a satellite network, a wireless local area network (LAN), a Global System for Mobile Communication, a Personal Communication Service, a Personal Area Network, Wireless Application Protocol, Multimedia Messaging Service, Enhanced Messaging Service, Short Message Service, Time Division Multiplexing based systems, Code Division Multiple Access based systems, D-AMPS, Wi-Fi, Fixed Wireless Data, IEEE 802.11 family of networking, Bluetooth, NFC, Radio Frequency Identification (RFID), Wi-Fi, and/or the like.

In addition, network 110 may include, without limitation, telephone lines, fiber optics, IEEE Ethernet 802.3, a wide area network, a wireless personal area network, a LAN, or a global network such as the Internet. In addition, network 110 may support an Internet network, a wireless communication network, a cellular network, or the like, or any combination thereof. network 110 may further include one network, or any number of the exemplary types of networks mentioned above, operating as a stand-alone network or in cooperation with each other. network 110 may utilize one or more protocols of one or more network elements to which they are communicatively coupled. network 110 may translate to or from other protocols to one or more protocols of network devices. Although network 110 is depicted as a single network, it should be appreciated that according to one or more examples, network 110 may comprise a plurality of interconnected networks, such as, for example, the Internet, a service provider's network, a cable television network, corporate networks, such as credit card association networks, and home networks.

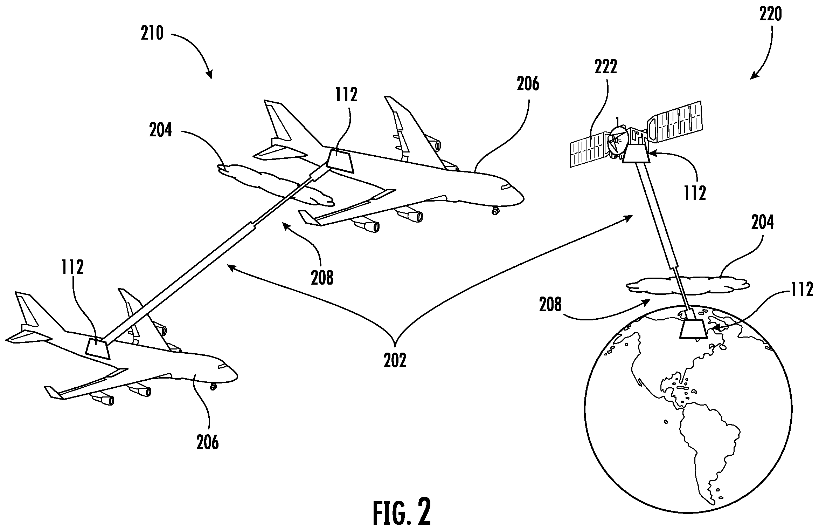

Computing device 102 is communicatively connected to an optical terminal 112 with at least one laser 114 and at least one spatial light modulator 116. Optical terminal 112 can utilize free-space optics for communication or sensing. Optical terminal 112 can be located, for example, in an aircraft, a satellite, or a ground station. Optical terminal 112 can communicate with a remote optical terminal, which may be located in another aircraft, a satellite, or a ground station, as shown in FIG. 2, by transmitting data via beams generated by laser 114. Optical terminal 112 can utilize beams generated by laser 114 for sensing, such as weather monitoring or mapping.

Laser 114 emits a laser beam that system 100 can alter to create a longitudinally structured beam as described herein. Laser 114 can include, for example, a gas laser such as a CO2 laser, sold-state laser, fiber laser, and a semiconductor laser. Laser 114 can generate a beam with a beam waist of 5 mm or smaller, 6 mm, 7 mm, 8 mm, 9 mm or larger, or any size in between. Laser 114 can emit a beam incident to spatial light modulator 116 with a wavelength corresponding to wavelengths typically implemented in free-space optics such as, without limitation, 1330 nm, 1500 nm, a wavelength in the near-infrared (NIR) or short-wave infrared (SWIR) spectrum, or any other wavelength.

Spatial light modulator 116 can be programmable to tailor the beam emitted by laser 114. Spatial light modulator 116 can adjust properties of the beam to one or more of the values defined by computing device 102. The defined values can be received from computing device 102. Specifically, spatial light modulator 116 can create multiple spatial modes of an incident beam each with a distinct longitudinal wavenumber and with tailored magnitudes based upon complex coefficients determined by computing device 102. Spatial light modulator 116 can coherently superposition the tailored modes, resulting in a longitudinally structured beam.

Computing device 102 determines the composition of a longitudinally structured beam to be propagated in a z direction based on turbulence in the pathway of the beam that laser 114 will transmit. To reduce the distortion of a beam caused by turbulence located in the beam's propagation path, computing device 102 determines spatial modes, namely Bessel-Gaussian spatial modes, of the beam that result in a longitudinally structured beam with a smaller width at the turbulence location due to the coherent superposition of the Bessel-Gaussian modes caused by constructive and destructive interference between the modes.

Computing device 102 receives turbulence information including a location of one or more turbulence regions. The turbulence information can also include a turbulence strength of each turbulence region. In some embodiments, the turbulence strength can include at least one Fried parameter for each turbulence region. The turbulence information can be generated locally, such as on-board an aircraft with system 100, or received from remote sources via network 110. The turbulence information can also include current movement or anticipated movement of the turbulence. Computing device 102 can receive the turbulence information from various sources, including from light detection and ranging (LiDAR), weather radar, air traffic control reports, real-time pilot reports, and the like. In some embodiments, computing device 102 device only determines Bessel-Gaussian modes for a beam with a z-dependent width when a turbulence strength exceeds a threshold. Computing device 102 can determine an expected location of the turbulence regions in relation to the beam to be emitted and generate the longitudinally structured beam based on the expected relative location of the turbulence locations. Computing device 102 can determine a location of turbulence and corresponding turbulence strength from the turbulence information in relation to the expected position of the beam to be emitted from optical terminal 112. Computing device 102 can determine the relative location of the turbulence region to the beam expected to be emitted from optical terminal 112 based upon the locations and movement of optical terminal 112, the destination of the beam, and the turbulence region as well as the anticipated time the beam will be emitted.

In some embodiments where system 100 is on an aircraft, computing device 102 can have stored in memory 106 or retrieve from database 108 historical data of turbulence generated by in-flight aircraft. The historical data can include turbulence information dependent on flight status of the aircraft. The flight status can include the altitude, speed, attitude, and/or model of the aircraft. Computing device 102 can retrieve the turbulence information corresponding to a current flight status of the aircraft, which can be used independently or in combination with other turbulence information to generate the longitudinally structured beam.

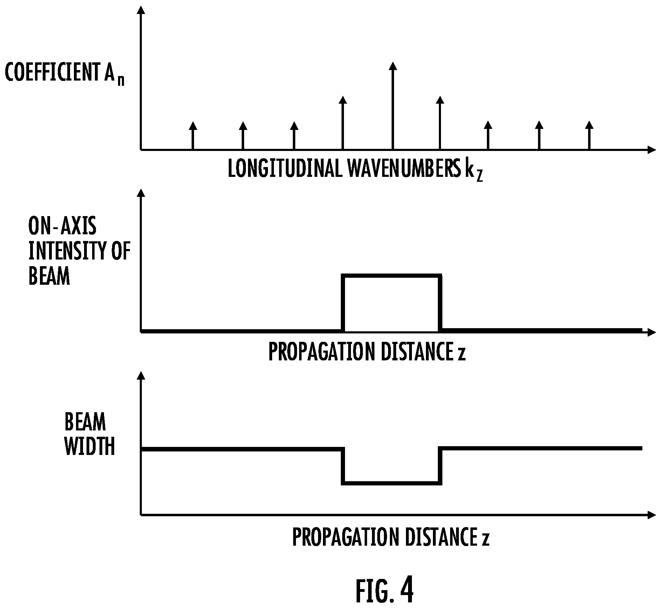

Computing device 102 determines the composition of the longitudinally structured beam with distance-dependent, or z-dependent, width by determining multiple Bessel-Gaussian (BG) spatial modes with different longitudinal wavenumbers *k_{z}* each having an orbital angular momentum (OAM) *l* equal to zero. The value *l* is the number of 2π phase shifts in the azimuthal direction. The value *k_{z}* is related to the radial wavenumber *kᵣ*, which determines the radial ring spacing in the intensity profile. The values *k_{z}* and *kᵣ* satisfy ${{k}_{z}}^{2} + {{k}_{r}}^{2} = {\left(\frac{2 π}{λ}\right)}^{2}$
where λ is the wavelength. Computing device 102 determines complex coefficients of *k_{z}* of the *l* = 0 order BG spatial modes based on the desired z-dependent beam width. The longitudinal wavenumbers *k_{z}* can have equal spatial frequency spacing, forming a series of evenly-spaced frequencies, or a "comb," in the space-frequency domain, as shown in FIG. 4. The waveform equation of the longitudinally structured beam propagated along the z-axis from *z* = 0 to *z* = *L* and consisting of (2N+1) BG spatial modes each at the same optical frequency *ω*₀ is: $ψ \left(ρ, z, t\right) = {e}^{- {iω}_{0} t} G \left(ρ\right) {\sum }_{n = - N}^{N} {A}_{n} {J}_{0} \left({k}_{p , n}ρ\right) {e}^{{ik}_{z , n} z}$
where *ρ* is the radius in the cylindrical coordinate; *k_{ρ,n}* is the transverse wavenumber and *k_{z,n}* is the longitudinal wavenumber, where *k_{ρ,n}*² + *k_{z,n}*² = *k*²; *G*(*ρ*) is a Gaussian apodization and can be selected by computing device 102 so that all BG spatial modes have a low divergence in the relevant longitudinal range. The coefficients {*Aₙ*} are given by following equation: ${A}_{n} = \frac{1}{L} {\int }_{0}^{L} F \left(z\right) {e}^{- i \frac{2 π}{L} nz} dz$
where the function F(z) defines the desired longitudinal on-axis central intensity distribution. For example, for a longitudinally structured beam with a higher intensity at the z-axis, as the central axis of the beam, and consequently a narrower beam width, at the distance *z*₁ ≤ *z* ≤ *z*₂, the function F(z) can be: $F \left(z\right) = \left\{\begin{matrix}1 for {z}_{1} \leq z \leq {z}_{2} \\ 0 elsewhere\end{matrix}\right.$

Therefore, computing device 102 can determine a distance range on the z-axis, namely,*z*₁ ≤ *z* ≤ *z₂*, for the beam to have a smaller width than elsewhere and determine the complex coefficients of the longitudinal wavenumbers *k_{z}* accordingly.

Spatial light modulator 116 modulates the incident coherent light from laser 114 to create a coherent superposition of multiple co-propagating BG modes with different longitudinal wavenumbers *k_{z}* and *l* = 0 orders. Spatial light modulator 116 receives instructions from computing devices 102 to generate multiple BG spatial modes of a beam incident to the spatial light modulator 116 each with a distinct longitudinal wavenumber *k_{z}* and a customized complex coefficient that determines the z-dependent amplitude. Spatial light modulator 116 generates a hologram based on the received instructions from computing device 102, specifically the BG spatial modes and their corresponding distinct longitudinal wavenumbers *k_{z}* and complex coefficients. When the beam is incident to the hologram, the hologram structures the spatial amplitude and phase of the beam to generate the BG spatial modes. The BG spatial modes, are coherently super-positioned resulting in the longitudinally structured beam.

System 100 can also include an optical system to filter out the desired longitudinally structured beam and remove any undesired diffraction order. For example, system 100 can include a 4f optical system 118 and an iris 120. After passing through the hologram generated by spatial light modulator 116, the beam can pass through 4f optical system 118 and then iris 120 for spatial filtering and/or further beam shaping.

The longitudinally structured beam can be structured to have a narrower beam at multiple regions along the z-axis corresponding to when the beam passes through multiple turbulence regions. The extent to which the longitudinally structured beam is narrowed can also be based on the corresponding turbulence strengths, such that the longitudinally structured beam is slightly narrow at a turbulence region of a moderate turbulence strength and further narrowed at a turbulence region of a strong turbulence strength. The longitudinally structured beam can also have different portions of reduced widths adjacent to each other when turbulence regions are adjacent to each other. Similarly, the longitudinally structured beam can have a variable width as it passes a single turbulence region with a variable turbulence strength, where the beam width is based upon the turbulence strength at the corresponding location along the beam path.

FIG. 2 is a schematic illustration of example longitudinally structured beams 202 passing through turbulence regions 204. In example 210, longitudinally structured beam 202 is transmitted between optical terminals 112 on different flying aircraft 206. In example 220, longitudinally structured beam 202 is transmitted between optical terminal 112 on a satellite 222 and optical terminal 112 on the ground, such as in a ground station. In both example 210 and example 220, longitudinally structured beam 202 is structured to have a narrowed region 208 at a location on the longitudinally structured beam 202 so that the beam width is smaller as it passes through turbulence region 204. Longitudinally structured beam 202 can have a narrower width only at the determined location of turbulence region 204 where the beam width changes at the perimeter of the turbulence region 204. In other embodiments, longitudinally structured beam 202 can be narrowed a distance before passing through turbulence region 204 and until a distance past the turbulence region 204 such that some of the beam is narrowed outside of the turbulence region 204.

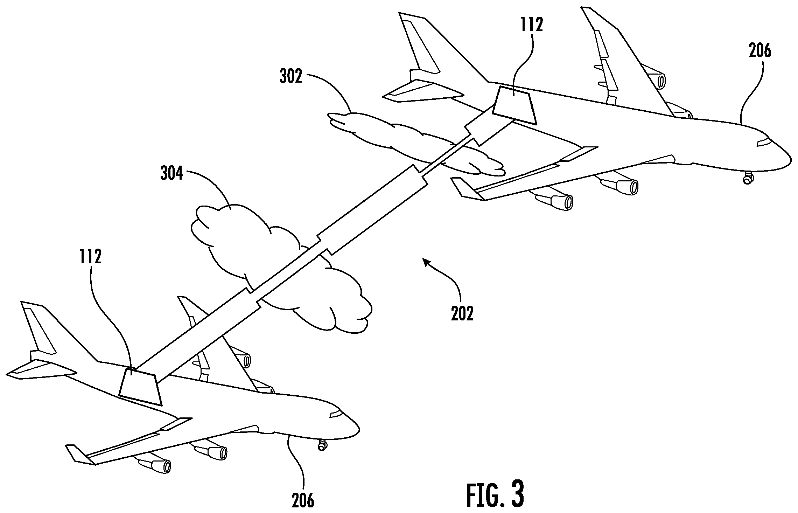

FIG. 3 is a schematic illustration of a longitudinally structured beam 202 passing through multiple turbulence regions. Longitudinally structured beam 202 can encounter multiple turbulence regions with elevated turbulence and so may be structured to have a narrow beam at multiple regions along the z-axis corresponding to when the beam passes through the turbulence regions. The extent to which longitudinally structured beam 202 is narrowed can also be based on the corresponding turbulence strengths, such that the longitudinally structured beam 202 is slightly narrow at a turbulence region of a moderate turbulence strength and further narrowed at a turbulence region of a strong turbulence strength. Similar to example 210 in FIG. 2, longitudinally structured beam 202 is transmitted between optical terminals 112 on different flying aircraft 206. In this example, however, longitudinally structured beam 202 passes through multiple turbulence regions, namely a first turbulence region 302 having a first turbulence strength and a second turbulence region 304 having a second turbulence strength, where the first turbulence strength is greater than the second turbulence strength. Accordingly, longitudinally structured beam 202 is structured to have a reduced width at first turbulence region 302 and second turbulence region 304. Longitudinally structured beam 202 width at first turbulence region 302 is smaller than its width at second turbulence region 304 to accommodate for the different turbulence strengths. Although the example in FIG. 3 shows only two turbulence regions and two corresponding narrowed regions of longitudinally structured beam 202, it is understood that additional turbulence regions may be identified in the pathway of the longitudinally structured beam 202 and the longitudinally structured beam 202 can be structured to have a corresponding number of narrow regions.

Longitudinally structured beam 202 can also have different portions of reduced widths adjacent to each other when turbulence regions are adjacent. For example, first turbulence region 302 may be adjacent to second turbulence region 304 such that longitudinally structured beam 202 passes through the first turbulence region 302 and then immediately passes through the second turbulence region 304. In such cases, longitudinally structured beam 202 can be structured so that a first length of the longitudinally structured beam 202 is narrowed to the first width, corresponding to the location where it passes through the first turbulence region 302, and an adjacent second length of the longitudinally structured beam 202 is narrowed to the second width, corresponding to the location where it passes through the second turbulence region 304. Similarly, longitudinally structured beam 202 can have a variable width as it passes a single turbulence region with a variable turbulence strength, where the width is based upon the turbulence strength at the corresponding location along the beam path.

FIG. 4 shows charts of different longitudinal wavenumbers in Bessel-Gaussian spatial modes and the resulting on-axis intensity and width of a beam from coherent super-positioning of the spatial modes. In the top chart, the longitudinal wavenumbers *k_{z}* include a series of evenly-spaced frequencies forming a comb in the space-frequency domain. The longitudinal wavenumbers *k_{z}* in the middle have a higher corresponding coefficient *Aₙ*, which causes the resulting longitudinally structured beam to have a region along the z-axis with a higher on-axis intensity, as shown in the middle chart. The on-axis intensity of the beam is inversely related to the beam's width, meaning that the beam will be narrower at the same region along the z-axis where the beam has a higher on-axis intensity.

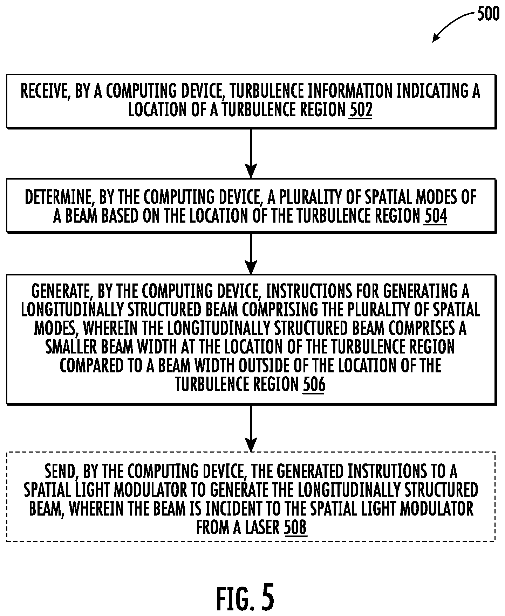

FIG. 5 is a flow chart of an example method 500 or generating a longitudinally structured beam for improved transmission in turbulence. As described herein, the steps of method 500 are performed by a computing device, but it is understood that method 500 can be implemented, for example, by at least one processor according to stored instructions in memory that, when executed, cause the processor to perform the steps described. In block 502, a computing device receives turbulence information indicating a location of a turbulence region. The turbulence information can also indicate a turbulence strength at the turbulence region.

In block 504, the computing device determines a plurality of spatial modes of a beam based on the location of the turbulence region. The plurality of spatial modes can include a plurality of Bessel-Gaussian spatial modes each including a distinct longitudinal wavenumber. The distinct longitudinal wavenumbers can have equal spatial frequency spacing. The computing device can further determine complex coefficients for the spatial modes based on the turbulence information.

In block 506, the computing device generates instructions for generating a longitudinally structured beam comprising the plurality of spatial modes, wherein the longitudinally structured beam comprises a smaller beam width at the location of the turbulence region compared to a beam width outside of the location of the turbulence region. The beam width of the longitudinally structured beam can narrow as it reaches the location of the turbulence region and widen past the location of the turbulence region, such that the beam width is narrower within the turbulence region compared to the beam width outside and on both sides of the turbulence region. The width of the longitudinally structured beam at the turbulence region can be based on the turbulence strength.

In optional block 508, the computing device sends the generated instructions to a spatial light modulator to generate the longitudinally structured beam, wherein the beam is incident to the spatial light modulator from a laser. The longitudinally structured beam can be generated from an aircraft. The longitudinally structured beam can be configured for optical communication.

While at least one example embodiment of the invention(s) is disclosed herein, it should be understood that modifications, substitutions, and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise.

### EMBODIMENTS OF THE INVENTION.

1. A method for generating a longitudinally structured beam for improved transmission in turbulence, the method comprising:
   receiving, by a computing device, turbulence information indicating a location of a turbulence region;
   determining, by the computing device, a plurality of spatial modes of a beam based on the location of the turbulence region; and
   generating, by the computing device, instructions for generating a longitudinally structured beam comprising the plurality of spatial modes, wherein the longitudinally structured beam comprises a smaller beam width at the location of the turbulence region compared to a beam width outside of the location of the turbulence region.
2. The method of embodiment 1, comprising sending, by the computing device, the generated instructions to a spatial light modulator to generate the longitudinally structured beam, wherein the beam is incident to the spatial light modulator from a laser.
3. The method of embodiment 1, wherein the instructions generated are for the beam width of the longitudinally structured beam to narrow as the longitudinally structured beam reaches the location of the turbulence region and to widen past the location of the turbulence region.
4. The method of embodiment 1, comprising generating the longitudinally structured beam from an aircraft, wherein the longitudinally structured beam is configured for optical communication.
5. The method of embodiment 1, wherein the turbulence information indicates a turbulence strength at the turbulence region, wherein the width of the longitudinally structured beam at the turbulence region is based on the turbulence strength.
6. The method of embodiment 1, wherein the plurality of spatial modes comprises a plurality of Bessel-Gaussian spatial modes each including a distinct longitudinal wavenumber.
7. The method of embodiment 6, wherein the distinct longitudinal wavenumbers comprise equal spatial frequency spacing.
8. A system for generating a longitudinally structured beam for improved transmission in turbulence, the system comprising:
   a computing device communicatively connected to a spatial light modulator, the computing device comprising a processor and memory storing instructions that, when executed by the processor, cause the processor to:
   receive turbulence information indicating a location of a turbulence region;
   determine a plurality of spatial modes of a beam based on the location of the turbulence region; and
   generate instructions for generating a longitudinally structured beam comprising the plurality of spatial modes, wherein the longitudinally structured beam comprises a smaller beam width at the location of the turbulence region compared to a beam width outside of the location of the turbulence region.
9. The system of embodiment 8, wherein the instructions cause the processor to send the generated instructions to the spatial light modulator to generate the longitudinally structured beam, wherein the beam is incident to the spatial light modulator from a laser.
10. The system of embodiment 8, wherein the instructions generated are for the beam width of the longitudinally structured beam to narrow as the longitudinally structured beam reaches the location of the turbulence region and to widen past the location of the turbulence region.
11. The system of embodiment 8, comprising an aircraft from which the longitudinally structured beam is generated, wherein the longitudinally structured beam is configured for optical communication.
12. The system of embodiment 8, wherein the turbulence information indicates a turbulence strength at the turbulence region, wherein the width of the longitudinally structured beam at the turbulence region is based on the turbulence strength.
13. The system of embodiment 8, wherein the plurality of spatial modes comprises a plurality of Bessel-Gaussian spatial modes each including a distinct longitudinal wavenumber.
14. The system of embodiment 13, wherein the distinct longitudinal wavenumbers comprise equal spatial frequency spacing.
15. A non-transitory computer-readable storage medium including instructions that when executed by a processor of a device, cause the processor to:
   receive turbulence information indicating a location of a turbulence region;
   determine a plurality of spatial modes of a beam based on the location of the turbulence region; and
   generate instructions for generating a longitudinally structured beam comprising the plurality of spatial modes, wherein the longitudinally structured beam comprises a smaller beam width at the location of the turbulence region compared to a beam width outside of the location of the turbulence region.
16. The non-transitory computer-readable storage medium of embodiment 15, wherein the instructions cause the processor to send the generated instructions to the spatial light modulator to generate the longitudinally structured beam, wherein the beam is incident to the spatial light modulator from a laser.
17. The non-transitory computer-readable storage medium of embodiment 15, wherein the instructions generated are for the beam width of the longitudinally structured beam to narrow as the longitudinally structured beam reaches the location of the turbulence region and to widen past the location of the turbulence region.
18. The non-transitory computer-readable storage medium of embodiment 15, comprising an aircraft from which the longitudinally structured beam is generated, wherein the longitudinally structured beam is configured for optical communication.
19. The non-transitory computer-readable storage medium of embodiment 15, wherein the turbulence information indicates a turbulence strength at the turbulence region, wherein the width of the longitudinally structured beam at the turbulence region is based on the turbulence strength.
20. The non-transitory computer-readable storage medium of embodiment 15, wherein the plurality of spatial modes comprises a plurality of Bessel-Gaussian spatial modes each including a distinct longitudinal wavenumber.

## Claims

1. Method (500) for generating a longitudinally structured beam (202) for improved transmission in turbulence, the method (500) comprising:
receiving (502), by a computing device (102), turbulence information indicating a location of a turbulence region (204; 302, 304);
determining (504), by the computing device (102), a plurality of spatial modes of a beam based on the location of the turbulence region (204; 302, 304); and
generating (506), by the computing device (102), instructions for generating a longitudinally structured beam (202) comprising the plurality of spatial modes, wherein the longitudinally structured beam (202) comprises a smaller beam width at the location of the turbulence region (204; 302, 304) compared to a beam width outside of the location of the turbulence region (204; 302, 304).

2. Method (500) according to claim 1, comprising sending (508), by the computing device (102), the generated instructions to a spatial light modulator (116) to generate the longitudinally structured beam (202), wherein the beam is incident to the spatial light modulator (116) from a laser (114).

3. Method (500) according to any one of claims 1 or 2, wherein the instructions generated are for the beam width of the longitudinally structured beam (202) to narrow as the longitudinally structured beam (202) reaches the location of the turbulence region (204; 302, 304) and to widen past the location of the turbulence region (204; 302, 304).

4. Method (500) according to any one of claims 1 to 3, comprising generating the longitudinally structured beam (202) from an aircraft (206), wherein the longitudinally structured beam (202) is configured for optical communication.

5. Method (500) according to any one of claims 1 to 4, wherein the turbulence information indicates a turbulence strength at the turbulence region (204; 302, 304), wherein the width of the longitudinally structured beam (202) at the turbulence region (204; 302, 304) is based on the turbulence strength.

6. Method (500) according to any one of claims 1 to 5, wherein the plurality of spatial modes comprises a plurality of Bessel-Gaussian spatial modes each including a distinct longitudinal wavenumber.

7. Method (500) according to claim 6, wherein the distinct longitudinal wavenumbers comprise equal spatial frequency spacing.

8. System (100) for generating a longitudinally structured beam (202) for improved transmission in turbulence, the system (100) comprising:
a computing device (102) communicatively connected to a spatial light modulator (116), the computing device (102) comprising a processor (104) and memory (106) storing instructions that, when executed by the processor (104), cause the processor (104) to:
receive turbulence information indicating a location of a turbulence region (204; 302, 304);
determine a plurality of spatial modes of a beam based on the location of the turbulence region (204; 302, 304); and
generate instructions for generating a longitudinally structured beam (202) comprising the plurality of spatial modes, wherein the longitudinally structured beam (202) comprises a smaller beam width at the location of the turbulence region (204; 302, 304) compared to a beam width outside of the location of the turbulence region (204; 302, 304).

9. System (100) according to claim 8, wherein the instructions cause the processor (104) to send the generated instructions to the spatial light modulator (116) to generate the longitudinally structured beam (202), wherein the beam is incident to the spatial light modulator (116) from a laser (114).

10. System (100) according to any one of claims 8 or 9, wherein the instructions generated are for the beam width of the longitudinally structured beam (202) to narrow as the longitudinally structured beam (202) reaches the location of the turbulence region (204; 302, 304) and to widen past the location of the turbulence region (204; 302, 304).

11. System (100) according to any one of claims 8 to 10, comprising an aircraft (206) from which the longitudinally structured beam (202) is generated, wherein the longitudinally structured beam (202) is configured for optical communication.

12. System (100) according to any one of claims 8 to 11, wherein the turbulence information indicates a turbulence strength at the turbulence region (204; 302, 304), wherein the width of the longitudinally structured beam (202) at the turbulence region (204; 302, 304) is based on the turbulence strength.

13. System (100) according to any one of claims 8 to 12, wherein the plurality of spatial modes comprises a plurality of Bessel-Gaussian spatial modes each including a distinct longitudinal wavenumber.

14. System (100) according to claim 13, wherein the distinct longitudinal wavenumbers comprise equal spatial frequency spacing.
